# EUROPEAN PATENT SPECIFICATION

(11) **EP 2 903 059 B1**
(45) Date of publication and mention of the grant of the patent: **26.07.2017**
(21) Application number: 12885297.7
(22) Date of filing: 26.09.2012
(51) Int. Cl.: H01M 4/131, H01M 4/485, H01M 4/66, H01M 4/62

(54) **NEGATIVE ELECTRODE FOR SECONDARY BATTERIES, AND SECONDARY BATTERY**
POSITIVELEKTRODE FÜR SEKUNDÄRBATTERIEN UND SEKUNDÄRBATTERIE
ÉLECTRODE NÉGATIVE POUR BATTERIES SECONDAIRES ET BATTERIE SECONDAIRE

(43) Date of publication of application: 05.08.2015
(73) Proprietor: Showa Denko K.K., Tokyo 105-8518 (JP)
(72) Inventor: YOKOUCHI, Hitoshi, Tokyo 105-8518 (JP); OHMORI, Masahiro, Tokyo 105-8518 (JP); KUNISAWA, Masatoshi, Tokyo 105-8518 (JP)
(74) Representative: Strehl Schübel-Hopf & Partner
(86) International application number: PCT/JP2012/074640
(87) International publication number: WO 2014/049697

(56) References cited:
- EP-A1- 2 892 103
- WO-A1-2012/096189
- WO-A1-2012/108212
- JP-A- H10 312 826
- JP-A- 2007 123 192
- JP-A- 2009 170 287
- JP-A- 2011 198 743
- JP-A- 2012 074 369
- JP-A- 2012 174 577
- JP-A- 2012 174 577

## Description

### BACKGROUND OF THE INVENTION

### Field of the Invention

The present invention relates to a negative electrode for a secondary battery and a secondary battery using the same. More specifically, the present invention relates to a negative electrode for a lithium ion secondary battery in which a titanium-containing oxide is used as a negative electrode active material.

### Description of Related Art

Recently, in order to suppress global warming, a reduction in carbon dioxide emission has been required. For example, in the automobile industry, a shift from a gasoline vehicle to an electric vehicle or a hybrid vehicle which emits less carbon dioxide has expanded. A secondary battery is mounted on an electric vehicle. Among secondary batteries, the development of a lithium ion secondary battery has attracted attention from the viewpoints of traveling distance, safety, and reliability. In general, the lithium ion secondary battery includes a positive electrode current collector and a negative electrode current collector, a positive electrode active material layer and a negative electrode active material layer, a non-aqueous electrolytic solution, a separator, and a packaging material.

In a lithium ion secondary battery which is generally widely used, an oxide of a transition metal containing lithium is used as a positive electrode active material, and the positive electrode active material layer is formed on aluminum foil, which is the positive electrode current collector, to form a positive electrode. In addition, a carbon material such as graphite is used as a negative electrode active material, and the negative electrode active material layer is formed on copper foil, which is the negative electrode current collector, to form a negative electrode. The positive electrode and the negative electrode are arranged with the separator interposed therebetween in the electrolytic solution in which a lithium salt electrolyte is dissolved in a non-aqueous organic solvent.

The charging of the lithium ion secondary battery is progressed by deintercalating lithium ions, which are occluded in the positive electrode active material, into the electrolytic solution and occluding the lithium ions of the electrolytic solution to the negative electrode active material. In addition, during discharging, a reaction opposite to the reaction of charging progresses and is progressed by deintercalating lithium ions from the negative electrode active material and occluding the lithium ions to the positive electrode active material.

However, when the system in which the carbon material is used as the negative electrode active material is charged to approximately 100%, dendrite is precipitated at a negative electrode potential of approximately 0 V. As a result, lithium ions which should be used for electron transport are consumed, and the negative electrode current collector is corroded and deteriorated. In the worst case, the precipitate penetrates the separator and may cause short-circuiting. In the battery having the above-described battery material configuration, in order to prevent the short-circuiting, it is necessary to accurately control the charging and discharging voltage. Even when a potential difference between the positive electrode active material and the negative electrode active material theoretically increases, only a part thereof can be used.

Accordingly, recently, a negative electrode active material having high potential has been actively studied and developed. For example, lithium titanate which is one of the titanium-containing oxides has a potential of about 1.5 V which is higher than that of the carbon material, and thus dendrite is not precipitated. In addition, even when charging and discharging are repeated, the volume expansion ratio is lower as compared to a case where the carbon material is used, and thus cycle characteristics are also superior. For example, Patent Literature (PTL) 1 discloses a secondary battery, in which secondary particles having an average particle size of 5 µm to 100 µm, which are obtained by aggregating primary particles of lithium titanate having an average particle size of 0.01 µm or more and less than 1 µm, are used as a negative electrode active material, and graphite having an average particle size of 30 nm to 1 µm is used as a conductive assistant.

In addition, recently, it has been reported that titanium dioxide is also desirable as a negative electrode active material. PTL 2 discloses a secondary battery in which titanium oxide, which is obtained by spraying and drying a slurry containing hydrous titanium oxide and heating an organic binder to be removed, is used as a negative electrode active material, acetylene black is used as a conductive assistant, and a porosity of secondary particles in the titanium oxide is 0.005 cm³/g to 1.0 cm³/g.

### Citation List

### Patent Literature

[PTL 1] Japanese Unexamined Patent Application, First Publication No.
[PTL 2] PCT International Publication No. WO2008/114667 EP 2 892 103 A1, which is prior art pursuant to Art. 54(3) EPC, describes an electrode undercoat layer formed between a metal foil and an active material layer wherein the undercoat layer contains a carbon material as a conductive material and a polysaccharide as a binder. WO 2012/096189 A1 discloses a negative electrode for a lithium-ion secondary battery according to the preamble of claim 1 of the present invention.

WO 2012/108212 discloses a negative electrode for a lithium-ion secondary battery comprising a metal foil and a negative electrode active material layer formed on a surface of the metail foil, wherein a film containing a conductive material is formed between the metal foil and the negative electrode active material layer.

JP 2012 174577 A discloses a lithium-ion battery wherein the negative electrode may be an aluminum metal foil with an undercoating film comprising a carbonaceous material supporting an active material layer comprising lithium titanates.

### SUMMARY OF THE INVENTION

In general, the electrical conductivity of the titanium-containing oxide is lower than that of the carbon material such as graphite. For example, in the secondary battery disclosed in PTL 1 including a negative electrode active material layer which includes a titanium-containing oxide and a small amount of conductive assistant, the contact resistance between negative electrode active material particles and the contact resistance at an interface between the negative electrode active material and a current collector are high. As a result, the internal resistance and impedance of the secondary battery increase, and there is a problem in that rapid charging and discharging at a high current cannot be performed.

Accordingly, when the titanium-containing oxide is used as a negative electrode active material, as a countermeasure to improve the conductivity of a negative electrode active material layer, a large amount of conductive assistant is added to the negative electrode active material layer as described in PTL 2, or a surface of the negative electrode active material is coated with a conductive material. However, in these countermeasures, the material which does not contribute to electrical capacity is added to the negative electrode active material layer, and thus the capacity of the negative electrode active material layer in terms of volume or mass decreases, which is not preferable.

An object of the present invention is to provide a secondary battery capable of rapid charging and discharging at a high current, in which, even when a titanium-containing oxide is used as a negative electrode active material, the internal resistance and impedance of the secondary battery are low without adding a large amount of conductive assistant to a negative electrode active material layer.

The present invention relates to a secondary battery shown below in [1] to [10]

[1] A negative electrode for a lithium-ion secondary battery, comprising:
   a metal foil; and
   a negative electrode active material layer that is formed on a single surface or both surfaces of the metal foil and includes a titanium-containing oxide as a negative electrode active material and a conductive assistant,
   wherein a film containing a conductive material is formed between the metal foil and the negative electrode active material layer,
   the film containing a conductive material includes a binder, and
   the binder includes a polysaccharide,
   characterized in that the conductive assistant is a fibrous carbonaceous material and the conductive material is carbon black and/or graphite.
[2] The negative electrode according to [1],
   wherein an amount of the conductive assistant in the negative electrode active material layer is 0.5 mass% to 2 mass%.
[3] The negative electrode according to [1] or [2],
   wherein an organic acid forms an ester bond with the polysaccharide.
[4] The negative electrode according to any one of [1] to [3],
   wherein the negative electrode active material is titanium oxide.
[5] The negative electrode according to any one of [1] to [3], wherein the negative electrode active material is lithium titanate.
[6] The negative electrode according to any one of [1] to [5,] wherein the metal foil is aluminum foil.
[7] The negative electrode according to any one of [1] to [6], wherein a thickness of the film containing a conductive material is 0.1 µm to 5 µm.
[8] A secondary battery comprising:
   the negative electrode according to any one of [1] to [7].
[9] The secondary battery according to [8],
   wherein the negative electrode is enclosed by a packaging material together with a positive electrode, a separator, and a non-aqueous electrolyte.
[10] The secondary battery according to [9],
   wherein the packaging material is obtained by laminating a resin on both surfaces of aluminum foil.

In the negative electrode according to the present invention, even when the titanium-containing oxide is used as the negative electrode active material, and the addition amount of the conductive assistant is small, the internal resistance of a secondary battery which is obtained by using the negative electrode according to the present invention can be significantly reduced. Accordingly, a secondary battery, which has improved cycle characteristics and improved rapid charge and discharge characteristics can be obtained. The reason why the internal resistance of a secondary battery which is obtained using the negative electrode according to the present invention is low is considered to be that the contact resistance between the negative electrode active material and the negative electrode current collector, which is one of the factors for the internal resistance, is reduced.

### DETAILED DESCRIPTION OF THE INVENTION

### [Negative Electrode For A Secondary Battery]

A negative electrode for a secondary battery according to the present invention includes metal foil; and a negative electrode active material layer that is formed on a single surface or both surfaces of the metal foil, in which a film containing a conductive material is formed between the metal foil and the negative electrode active material layer. The negative electrode for a secondary battery according to the present invention may include only the metal foil, the film containing a conductive material, and the negative electrode active material layer, and may further include a well-known member, such as a protective layer, which is used in a negative electrode for a secondary battery.

### (Metal Foil)

The material of the metal foil is not particularly limited, and typically, a material which is used for a current collector of a lithium ion secondary battery can be used. Foil of aluminum or an alloy thereof (hereinafter, collectively referred to as "aluminum foil) is preferably used because it is inexpensive, an oxide film on a surface thereof is stable, and there is little variation in quality. The material of the aluminum foil is not particularly limited, and a well-known material, which is used as a current collector of a secondary battery, can be used. A pure aluminum foil or an aluminum alloy foil containing 95% or more of aluminum is preferably used. Examples of the pure aluminum foil include A1085 material, and examples of the aluminum alloy foil include A3003 material (to which Mn is added).

The thickness of the aluminum foil is not particularly limited, and is typically 5 µm to 200 µm and the thickness is preferably 5 µm to 100 µm in the case of performing a roll-to-roll process, from the viewpoints of reducing the size of a secondary battery and the handleability of the aluminum foil and other members such as a current collector and an electrode obtained by using the aluminum foil.

The shape of the aluminum foil may be foil in which holes are not formed; foil in which holes are formed, for example, two-dimensional mesh foil, three-dimensional net-shaped foil, or punching metal; or porous foil.

The surface of the aluminum foil may be subjected to a well-known surface treatment, and examples of the surface treatment include mechanical surface treatment, etching, chemical conversion treatment, anodic oxidation, wash primer, corona discharge, and glow discharge. Among the surface treatments, in a surface treatment of forming an insulating film other than a natural oxide film on the surface of the aluminum foil, it is necessary to control the film thickness such that a function as a current collector does not deteriorate.

### (Film Containing Conductive Material)

The film containing a conductive material is formed between the metal foil and the negative electrode active material layer described below, and the thickness thereof is preferably 0.1 µm or more and 5 µm or less (0.1 µm to 5 µm), more preferably 0.5 µm or more and 3 µm or less (0.5 µm to 3 µm), and still more preferably 0.5 µm or more and 2 µm or less (0.5 µm to 2 µm). When the thickness is within the above-described range, a uniform film having no cracks or pinholes can be formed, and an increase in the weight of a battery, which is caused by the thickness of the film, and the internal resistance of the negative electrode can be reduced. The thickness of the film containing a conductive material is measured by cutting the negative electrode into a cross-section in the thickness direction and observing the cut cross-section by using TEM (transmission electron microscope). It is preferable that the thickness is measured in three or more visual fields, and it is preferable that the thicknesses of three or more positions are measured in each visual field. At this time, when the surface of the film containing a conductive material is significantly rough, a minimum thickness portion and a maximum thickness portion need to be included in the measurement positions. An arithmetic average value of the thicknesses of all the measurement positions is set as the thickness of the film containing a conductive material.

The film containing a conductive material may be formed on a part or all of the surfaces of the metal foil. The film containing a conductive material may be formed not only on the principal surface of the metal foil but also on an end surface thereof. When the film containing a conductive material is formed on a part of the metal foil, the film may be formed on the entire range of a part of a surface of the metal foil, or may be formed in a patterned manner such as a dot pattern or a line-and-space pattern.

### <Conductive Material>

The conductive material is a carbonaceous material, i. e. carbon black and/or graphite. Examples of the carbon black include acetylene black, Ketjen black, and furnace black. Graphite may be artificial graphite or natural graphite. Among these carbonaceous materials, one kind may be used alone, or two or more kinds may be used in combination. The carbonaceous material may be coated with powder of metal such as gold, silver, copper, nickel, iron, or zinc.

The conductive material may be spherical particles or irregular-shaped particles or may be anisotropic shaped particles having a needle shape, a rod shape, or the like.

The particulate conductive material is not particularly limited by the size of it, but the number average primary particle size is preferably 10 nm to 5 µm and more preferably 10 nm to 100 nm. The number average primary particle size of the conductive material can be obtained by measuring primary particle sizes of 100 to 1000 conductive material particles by using an electron microscope and by calculating the average value thereof. In the case of a spherical particle, the equivalent spherical diameter is regarded as the particle size, and in the case of an irregular-shaped particle, the maximum length is regarded as the particle size.

The irregular-shaped conductive material has a large surface area per mass and a large contact area with a current collector and an electrode active material. Therefore, even when a small amount of the conductive material is added, the conductivity between a current collector and an electrode active material or between electrode active material particles can be improved. Examples of a particularly effective irregular-shaped conductive material include vapor grown carbon fiber, carbon nanotube, and carbon nanofiber. The average fiber diameters of vapor grown carbon fiber, carbon nanotube, and carbon nanofiber are typically 0.001 µm to 0.5 µm and preferably 0.003 µm to 0.2 µm, and the average fiber lengths thereof are typically 1 µm to 100 µm and preferably 1 µm to 30 µm from the viewpoint of improving conductivity. The average fiber length and the average fiber diameter of the conductive material can be obtained by measuring the fiber diameters and the fiber lengths of 100 to 1000 conductive fibers by using an electron microscope and by calculating average values thereof based on number.

The conductive material may be completely buried in the film or may be fixed in a state where a part thereof is exposed from the film. The dispersed state of the conductive material in the film is not particularly limited as long as the conductivity of the film can be obtained. At this time, it is preferable that the conductive material does not fall off from the film. The thickness of the film containing a conductive material and the particle size of the conductive material may be selected such that the binding property between the film and other materials in the film and between the film and the above-described metal foil or negative electrode active material layer can be improved.

The amount of the conductive material in the film containing a conductive material is preferably 30 mass% to 80 mass% and more preferably 30 mass% to 70 mass%. By controlling the content of the conductive material within the above-described range, the conductivity of the film containing a conductive material is improved, and the electrical conductivity between the metal foil such as the aluminum foil and the negative electrode active material layer is improved.

### <Binder>

The film containing a conductive material contains a binder (a binding material). When the film containing a conductive material contains the binder, the amount thereof in the film containing a conductive material is preferably 20 mass% to 100 mass% and more preferably 20 mass% to 70 mass%.

The binder includes a polysaccharide and is not particularly limited as long as it can bind the conductive material particles, the conductive material and the metal foil, or the conductive material and the negative electrode active material layer to each other. When the binder is a polymer having a weight average molecular weight of preferably 1.0×10⁴ to 2.0×10⁵ and more preferably 5.0×10⁴ to 2.0×10⁵, the workability during the formation of the film containing a conductive material and the strength of the film are superior. The weight average molecular weight can be obtained by using gel permeation chromatography as a value in terms of a standard sample such as polystyrene or pullulan.

The polysaccharide may be homopolysaccharide or heteropolysaccharide as long as it is a polymer obtained by polycondensation of monosaccharides. Specific examples of the polysaccharide include chitin, chitosan, cellulose, and derivatives thereof. Among these polysaccharide, chitosan is preferably used.

Among the above-described binders, one kind may be used alone, or two or more kinds may be used in combination for the film. When two or more kinds of binders are used to form the film, the two or more kinds of binders may be mixed with each other, or may form a crosslinked structure, an interpenetrating polymer network structure, or a semi-interpenetrating polymer network structure. However, it is preferable that the binders form a crosslinked structure, an interpenetrating polymer network structure, or a semi-interpenetrating polymer network structure. In addition, when one kind of binder is used alone, it is preferable that the binder is crosslinked.

### <Polysaccharide>

Among the above-described binders, a film having significantly superior non-aqueous electrolytic solution resistance can be obtained. The reason is considered to be that the density of a film containing a polysaccharide is high.

The polysaccharide may be derivatized, and examples of derivatives include a hydroxyalkylated polysaccharide, a carboxyalkylated polysaccharide, and a polysaccharide esterified with sulfuric acid. It is particularly preferable that the polysaccharide is obtained by hydroxyalkylation because the solubility in a solvent can be made to be high, and the film containing a conductive material can be easily formed. Examples of a hydroxyalkyl group include a hydroxyethyl group, a hydroxypropyl group, and a glyceryl group. Among these hydroxyalkyl groups, a glyceryl group is preferably used. The hydroxyalkylated polysaccharide may be produced by using a well-known method.

### <Additive Added to Film Containing Conductive Material>

In addition to the above-described resin and conductive material, additives such as a dispersion stabilizer, a thickener, a settling inhibitor, a skinning inhibitor, a defoamer, an electrostatic coatability improver, a sagging inhibitor, a leveling agent, a crosslinking catalyst, and a cissing inhibitor and the like may be added to the film containing a conductive material.

### <Organic Acid>

When the film containing a conductive material contains a polysaccharide as the binder, it is preferable that an organic acid is added as an additive. The organic acid has a function of improving the dispersibility of the polysaccharide in a solvent of a coating solution described below. It is preferable that the organic acid is a divalent or higher organic acid because it is crosslinked with the polysaccharide so as to improve the electrolytic solution resistance of the film containing a conductive material by forming an ester bond with the polysaccharide during the heating and drying of the coating solution. Further, it is more preferable that the organic acid is a trivalent or higher organic acid. The organic acid may be present as a free component in the film containing a conductive material but is preferably present in the form of being bonded to the polysaccharide as described above. When the organic acid is present as a free component, the organic acid may be present as a free acid, or may be present as a derivative such as an acid anhydride.

By analyzing the film by infrared spectroscopic analysis, it can be confirmed that the organic acid is bonded to the polysaccharide in the film. For example, when a carboxylic acid described below is used as the organic acid, a carboxylic acid in a free state has a single peak caused by absorption of a carboxyl group at about 1709 cm⁻¹. By this carboxyl group being bonded to the polysaccharide, the structure changes from an acid to an ester, and the peak is shifted to a high frequency side. The peak is shifted to about 1735 cm⁻¹, and the binding degree can be easily calculated from the shift amount from 1709 cm⁻¹.

Examples of the organic acid added include carboxylic acid, sulfonic acid, and phosphonic acid. Among these organic acids, carboxylic acid is preferably used. Examples of the carboxylic acid include phthalic acid, trimellitic acid, pyromellitic acid, succinic acid, maleic acid, citric acid, 1,2,3,4-butanetetracarboxylic acid, 1,2,4-butanetricarboxylic acid, and 2-phosphono-1,2,3,4-butanetetracarboxylic acid. Among these carboxylic acids, pyromellitic acid, 1,2,3,4-butanetetracarboxylic acid, 1,2,4-butanetricarboxylic acid, and 2-phosphono-1,2,3,4-butanetetracarboxylic acid are preferable. Among these organic acids, one kind may be used, or two or more kinds may be used.

The content of the organic acid is 40 parts by mass to 120 parts by mass and more preferably 40 parts by mass to 90 parts by mass based on 100 parts by mass of the polysaccharide.

### (Negative Electrode Active Material Layer)

### <Negative Electrode Active Material>

Examples of the titanium-containing oxide used as the negative electrode active material include titanium dioxide and lithium titanate. The amount of the negative electrode active material in the negative electrode active material layer is preferably 78 mass% to 94.5 mass% and more preferably 80 mass% to 90 mass%.

### <Titanium Dioxide>

A method of producing titanium dioxide is not particularly limited and can be selected from the following methods including: methods in which starting materials are different, for example, a method of refining a titanium chloride and a method of refining a titanium sulfate; and methods in which reaction conditions are different, for example, a gas-phase method, a liquid-phase method, and a solid-phase method. In addition, the method can be selected according to the desired properties of the negative electrode active material such as purity, crystal form, crystallinity, particle size, and aggregation state.

Examples of the crystal form of titanium dioxide which is generally known include anatase type, rutile type, brookite type, and bronze type. Among these crystal forms, brookite type, or bronze type is preferably used because they have relatively low crystal density and have high capacity for easily occluding lithium ions. In addition, titanium dioxide which is used as the negative electrode active material may contain an amorphous phase. The crystal form can be analyzed by using an X-ray diffractometer.

The primary particle size of titanium dioxide is not particularly limited, and the number average primary particle size thereof is preferably 0.005 µm to 5 µm and more preferably 0.01 µm to 1 µm. When the number average primary particle size is within this range, the handleability of the negative electrode active material powder and the filling density in the negative electrode active material layer can be simultaneously satisfied. The number average primary particle size can be obtained by measuring primary particle sizes of 100 to 1000 titanium dioxide particles by using an electron microscope and calculating the average value thereof. In the case that the titanium dioxide particles are spherical particles, the equivalent spherical diameter is regarded as the particle size, and in the case that the titanium dioxide particles are irregular-shaped particles, the maximum length is regarded as the particle size.

### <Lithium Titanate>

Next, lithium titanate according to the present invention will be described. As the lithium titanate, a well-known one can be used as a negative electrode active material of a secondary battery. In general, spinel type lithium titanate (Li₄Ti₅O₁₂) and ramsdellite type lithium titanate (Li₂Ti₃O₇) are known, and ramsdellite type lithium titanate is preferably used because it has a higher capacity.

The primary particle size of lithium titanate is not particularly limited, and due to the same reason as that of the above-described titanium dioxide, the number average primary particle size thereof is preferably 0.005 µm to 5 µm and more preferably 0.01 µm to 1 µm.

### <Conductive Assistant>

The titanium-containing oxide which is the negative electrode active material used in the present invention has low conductivity as it is, and thus a conductive assistant is added to the negative electrode active material layer. The conductive assistant has a function of promoting electron transfer by existing on the surface of the negative electrode active material particles or between the negative electrode active material particles, and thus it is preferable that the conductive assistant is conductive. As the conductive assistant, a carbonaceous material is used.

As the carbonaceous material, for example, carbon black such as acetylene black, Ketjen black, or furnace black, artificial or natural graphite, carbon fiber, vapor grown carbon fiber, carbon nanotube, or carbon nanofiber is used. Among these carbonaceous materials, one kind may be used alone, or two or more kinds may be used in combination.

In addition, when the carbonaceous material is used as the conductive material contained in the film containing a conductive material, the carbonaceous material which is the conductive assistant contained in the negative electrode active material layer may be the same as or different from the conductive material contained in the film containing a conductive material. It is preferable that these carbonaceous materials are different from each other because the formed network is more three-dimensional and superior conductivity can be obtained. In particular, the following combination is more preferable: the carbonaceous material of the film containing a conductive material is carbon black such as acetylene black, Ketjen black, or furnace black and/or graphite; and the conductive assistant contained in the negative electrode active material layer is a fibrous carbonaceous material such as carbon fiber, vapor grown carbon fiber, carbon nanotube, or carbon nanofiber. The reason is as follows. When carbon black and/or graphite is used in the film containing a conductive material, the current collector can be coated with the film uniformly and thin, and thus the contact resistance between the negative electrode current collector and the negative electrode active material decreases. On the other hand, by using the fibrous carbonaceous material as the conductive assistant, a conductive path is obtained between the negative electrode active material particles, and thus sufficient conductivity can be obtained even if the amount of the additive is small.

The amount of the added conductive assistant in the negative electrode active material layer is preferably 0.5 mass% to 2 mass% and more preferably 0.5 mass% to 1 mass%. When the addition amount of the conductive assistant is within this range, the conductivity between the negative electrode active material particles can be improved without decreasing the addition amount of the negative electrode active material.

The conductive assistant may be spherical particles or irregular-shaped particles or may be anisotropic particles having a needle shape, a rod shape, or the like.

The particle size of the particulate conductive assistant is not particularly limited, but the number average primary particle size is preferably 10 nm to 5 µm and more preferably 10 nm to 100 nm. The average fiber diameters of carbon nanotube, carbon nanofiber, and vapor grown carbon fiber are typically 0.001 µm to 0.5 µm and preferably 0.003 µm to 0.2 µm, and the average fiber lengths thereof are typically 1 µm to 100 µm and preferably 1 µm to 30 µm from the viewpoint of improving conductivity. The number average primary particle size, the average fiber diameter, and the average fiber length of the conductive assistant can be measured by using the same method as in the case of the conductive material of the film containing a conductive material.

### <Binder>

The negative electrode active material layer may contain the binder. The binder is not particularly limited, and a well-known binder which is used for an electrode of a lithium ion secondary battery can be used. For example, polyvinylidene fluoride may be used. When the binder is used, the content thereof in the negative electrode active material layer is preferably 2 mass% to 20 mass% and more preferably 2 mass% to 15 mass%. In this range, peeling or cracking does not occur, and a negative electrode in which conductivity is secured can be obtained.

### <Additives>

In addition to the negative electrode active material, the conductive assistant, and the binder described above, the negative electrode active material layer may further contain well-known additives such as a thickener which are used for a negative electrode active material layer of a lithium ion secondary battery.

### [Method of Manufacturing Negative Electrode for Secondary Battery]

The negative electrode for a secondary battery according to the present invention can be manufactured by forming the film containing a conductive material on a single surface or both surfaces of the metal foil and then forming the negative electrode active material layer on the film containing a conductive material.

### (Formation of Film)

Examples of a method of forming the film containing a conductive material on the metal foil include a gas-phase method such as a sputtering method, a vapor-deposition method, or a chemical vapor deposition method; and a coating method such as a dip method or a printing method. It is preferable to use a coating method capable of a continuous process by a roll-to-roll process at a low cost.

In order to form the film containing a conductive material by using the coating method, the metal foil is coated with a coating solution containing a conductive material and the coated metal foil is dried. When film containing a conductive material contains a binder and an additive, as the coating solution, a coating solution containing the binder and the additive themselves may be used. Alternatively, a coating solution containing precursors of the binder and the additive may be converted into the binder and the additive in the film by drying the coating solution and performing another post treatment thereon.

For example, when the film containing a conductive material contains the above-described organic acid, as the coating solution, a coating solution containing a free organic acid may be used. Alternatively, a coating solution containing an acid derivative such as an acid anhydride or an ester may be heated to obtain a free organic acid or an organic acid bonded to a polysaccharide. It is preferable that a coating solution containing a free organic acid or an acid anhydride is used because a by-product is not produced during the heating and drying of the coating solution.

In addition, when the film containing a conductive material contains an acrylic polymer or a vinyl polymer as the binder, as the coating solution, a coating solution containing the above-described polymer itself may be used. Alternatively, a coating solution containing monomers which constitute the polymer may be converted into the polymer in the film by using a method such as heating or light irradiation.

Examples of a solvent which is used in the coating solution for forming the film containing a conductive material include aprotic polar solvents such as N-methylpyrrolidone and γ-butyrolactone; protic polar solvents such as ethanol, isopropyl alcohol, and n-propyl alcohol; water and the like. The amount of the solvent in the coating solution is preferably 20 mass% to 99 mass% and more preferably 50 mass% to 98 mass%. By controlling the amount of the solvent to be within this range, the workability of coating or the like is superior, and the coating amount of the film containing a conductive material which is obtained by coating and drying the coating solution can be made to be desirable.

A method of coating the metal foil such as the aluminum foil with the coating solution for forming the film containing a conductive material is not particularly limited, and a well-known coating method which is used for manufacturing a secondary battery can be adopted as it is.

Specific examples of the method include a cast method, a bar coater method, a dip method, and a printing method. Among these methods, bar coating, gravure coating, gravure reverse coating, roll coating, Meyer bar coating, blade coating, knife coating, air knife coating, Comma coating, slot die coating, slide die coating, or dip coating is preferably used from the viewpoint of easily controlling the thickness of the coating film. When both surfaces are coated with the coating solution, the surfaces may be coated one by one or may be coated simultaneously.

The coating amount of the coating solution coating the metal foil is preferably 0.1 g/m² to 5 g/m² and more preferably 0.5 g/m² to 3 g/m² in terms of mass after drying. By controlling the coating amount to be within this range, the surface of the current collector can be uniformly coated without increasing the resistance in the thickness direction.

The coating amount can be measured as follows. First, a portion of the metal foil, where the film containing a conductive material is formed, is cut. The accurate area of the film containing a conductive material; and the mass of the metal foil on which the film containing a conductive material is formed are measured. Next, the film is peeled off by using a peeling agent. The mass of the metal foil after the peel-off is measured, and a difference between the mass of the metal foil such the aluminum foil, on which the film containing a conductive material is formed, and the mass of the metal foil after the peel-off of the film is obtained as the mass of the film containing a conductive material. By dividing the mass of the film containing a conductive material by the area of the metal foil, the coating amount can be calculated. As the peeling agent, a peeling agent which is generally used for a coating material or a resin can be used as long as it does not damage the metal foil such as the aluminum foil.

A drying method of the coating solution is not particularly limited. For example, the coating solution is heated for 10 seconds to 10 minutes within a temperature range of preferably 100°C to 300°C and more preferably 120°C to 250°C. By heating the coating solution under the above-described conditions, the solvent in the film can be completely removed without decomposing the binder and the additive in the film containing a conductive material. In addition, a film having a satisfactory surface shape can be formed with high throughput. In addition, when a coating solution containing precursors which form a binder and an additive by heating is used, a reaction of converting the precursors into the binder and the additive can be sufficiently progressed.

### (Formation of Negative Electrode Active Material Layer)

The negative electrode for a secondary battery can be obtained by forming the negative electrode active material layer containing the conductive assistant on the film containing a conductive material. At this time, another layer may be formed between the film containing a conductive material and the negative electrode active material layer. However, it is preferable that the negative electrode active material layer is formed in contact with the film containing a conductive material. The method of forming the negative electrode is not particularly limited, but a well-known method which is used for manufacturing a secondary battery can be adopted. For
example, when the negative electrode active material layer is formed by using a coating method, a coating solution in which the negative electrode active material and optionally the conductive assistant and the binder are dispersed in a solvent is used. The solvent used herein is not particularly limited as long as it does not deteriorate the film containing a conductive material, and for example, N-methyl-2-pyrrolidone can be used. In the coating method, a die coater or the like can be used, and the negative electrode can be obtained by coating and drying the coating solution. Finally, through pressing, the electrode density can be increased.

### [Secondary Battery]

A secondary battery according to the present invention includes the above-described negative electrode. The secondary battery further includes a positive electrode, a separator, and a non-aqueous electrolyte, and these components are enclosed by a packaging material.

### (Positive Electrode)

The positive electrode is not particularly limited as long as it can be used in a secondary battery. In many cases, the positive electrode includes a positive electrode active material, a conductive assistant, and a binder. As the positive electrode active material, for example, lithium cobalt oxide (LiCoO₂), lithium manganese oxide (LiMn₂O₄), lithium nickel oxide (LiNiO₂) a ternary lithium compound of Co, Mn, and Ni (Li(CoₓMn_{y}Ni_{z})O₂), a sulfur compound (TiS₂), or an olivine compound (LiFePO₄, LiMnPO₄) can be used. Examples of the conductive assistant include carbon black such as acetylene black, Ketjen black, or furnace black, artificial or natural graphite, carbon fibers, vapor grown carbon fibers, carbon nanotubes, carbon nanofibers and the like.
Examples of the binder include polyvinylidene fluoride.

### (Separator)

As the separator, a well-known one which is used for a secondary battery can be used. Examples of the separator include microporous films of polyethylene and polypropylene. When a polymer electrolyte described below is used as the non-aqueous electrolyte, the separator is not necessarily provided.

### (Non-Aqueous Electrolyte)

In the secondary battery, the electrolyte may be present as the non-aqueous electrolytic solution, may be present as the polymer electrolyte, or may be present as an inorganic solid electrolyte and a molten salt electrolyte. In either case, a well-known material which is used for a lithium ion secondary battery can be used.

The non-aqueous electrolytic solution contains an electrolyte in a non-aqueous solvent. Examples of the non-aqueous solvent include cyclic carbonic acid esters such as propylene carbonate (PC), ethylene carbonate (EC) and the like; chain carbonic acid esters such as dimethyl carbonate (DMC), ethyl methyl carbonate (EMC), diethyl carbonate (DEC) and the like; and other fatty acid esters. Among these non-aqueous solvents, one kind may be used alone, or two or more kinds may be mixed at an arbitrary ratio to be used. In addition, examples of the electrolyte include fluorine-containing lithium salts such as lithium hexafluorophosphate (LiPF₆) and lithium tetrafluoroborate (LiBF₄).

Examples of the polymer electrolyte include those obtained by adding the above-described electrolyte salts to the following polymers including: polyethylene oxide derivatives and polymers including the derivatives; polypropylene oxide derivatives and polymers including the derivatives; phosphoric ester polymers; and polycarbonate derivatives and polymers including the derivatives.

Examples of the inorganic solid electrolyte include those containing sulfide-based glass as a major component, for example, glass ceramics containing a combination of lithium sulfide and one or more elements selected from the group consisting of silicon sulfide, germanium sulfide, phosphorus sulfide, and boron sulfide as a component. Among these, a combination of lithium sulfide and phosphorus sulfide is preferably used due to its high ion conductivity.

The molten salt electrolyte can also be used. As the molten salt electrolyte, for example, a combination of methyl propyl imidazolium bis(fluorosulfonyl) amide and lithium bis(trifluoromethane) sulfonic acid amide can be used.

### (Packaging Material)

As the packaging material, a well-known packaging material which is used for a secondary battery can be selected. Examples include laminated packaging materials and metal cans. However, from the viewpoints of an increase in the size and a decrease in the weight of the secondary battery, a laminated packaging material having a small unit weight is preferably used. The configuration of the laminated packaging material is not particularly limited. Example is a laminated packaging material having polymer layers formed on both sides of a metal foil.

Among the polymer layers, an outside layer which is positioned on the outside of the secondary battery is generally selected in consideration of thermal resistance, thrust strength, slipping property, printability, and the like. Specifically, for example, a polyamide layer or a laminated layer in which polyester is laminated on polyamide is used. Examples of the polyester used herein include polyethylene terephthalate, polyethylene naphthalate, and polybutylene terephthalate. In addition, in a battery manufacturing process, a coating layer for improving resistance to electrolytic solution may be formed on the surface of the polyamide layer in consideration of the risk that an electrolytic solution may be attached to the polyamide of the outside layer. As such a coating layer, at least one polymer selected from fluorine-containing polymers, acrylic polymers, polyurethane, polyester, and polysilicone is used.

Among the polymer layers, an inside layer which is positioned on the inside of the secondary battery is not particularly limited as long as it can be heated and melted to enclose the secondary battery in a bag shape. A layer containing polyolefin as a major component is preferably used, and a layer containing polypropylene as a major component is more preferably used. The inside layer may be a laminated layer in which plural layers are laminated. For example, an acid-modified polypropylene layer is formed on the metal foil side, and a polypropylene sheet is formed thereon. In addition, a laminated layer in which random polypropylene and block polypropylene are laminated may also be used. It is preferable that the thickness of the inside layer is 20 µm to 150 µm because the sealing property by heating is satisfactory.

Examples of the metal foil used for the packaging material, include aluminum foil, a stainless foil, a nickel foil and the like. Aluminum foil is particularly preferable because it is light and inexpensive. The material of the aluminum foil is not particularly limited. However, a soft aluminum foil is preferably used in consideration of workability, and aluminum-iron alloy foil such as A8021 or A8079 is generally selected in consideration of strength. In addition, the thickness is preferably within a range of 20 µm to 100µm in consideration of moisture barrier properties, strength, and workability.

The laminated packaging material may further include another layer such as an adhesive layer which is provided between the outside layer and the metal foil or between the inside layer and the metal foil.

### (Use of Secondary Battery)

The secondary battery can be applied to a power supply system. This power supply system can be applied to automobiles; transportation equipment such as trains, ships, and airplanes; portable devices such as mobile phones, portable information terminals, and portable electronic calculators; office equipment; and power generation systems such as photovoltaic power generation systems, wind power generation systems, and fuel cell systems.

### Examples

Next, the present invention will be described in detail by using Examples and Comparative Examples.

### [Example 1]

### (Preparation of Coating Solution for Forming Film Containing Conductive Material)

The following materials were used in mixing amounts shown in Table 1.

Conductive material: acetylene black (DENKA BLACK (registered trademark); (powder) manufactured by Denki Kagaku Co., Ltd. number average primary particle size: 35 nm)

Binder: glycerylated chitosan (manufactured by Dainichiseika Color & Chemicals Mfg. Co., Ltd., deacetylation degree: 86 mol%, weight average molecular weight: 8.6×10⁴)

Solvent: N-methylpyrrolidone (special grade reagent), 2-propanol (special grade reagent)

The above-described materials were dispersed by using a dissolver-type stirrer at a rotating speed of 300 rpm for 10 minutes and were further dispersed by using a homogenizer (product name: PRO200 manufactured by Iedatrading Corporation) at 20,000 rpm for 30 seconds. As a result, a sufficiently dispersed coating solution was prepared.

### (Preparation of Negative Electrode)

### <Formation of Film Containing Conductive Material>

Next, aluminum foil having a thickness of 30 µm which was formed of A1085 material washed with alkali was prepared. By using a Meyer bar, the entire range of a single surface of the aluminum foil was coated with the above-described coating solution according to a bar coater method. Next, the coating solution was heated and dried in air at 180°C for 3 minutes. Similarly, the other surface of the metal foil was coated with the above-described coating solution, and the coating solution was heated and dried. As a result, a film containing a conductive material was formed on both surfaces of the metal foil.

### <Properties of Film Containing Conductive Material>

The obtained aluminum foil on which the film containing a conductive material was formed was cut by using FIB (focused ion beam) so that a cross-section is exposed, and platinum was deposited thereon. Next, by using TEM (Model: H-9500 manufactured by Hitachi Co., Ltd.), first, elementary analysis was performed by EDX (energy dispersive X-ray spectroscopy) to determine a boundary between an oxide film of the surface of the aluminum foil and the film containing a conductive material. Next, images were arbitrarily acquired in 5 visual fields, and the thickness of the film containing a conductive material was measured at 5 positioned which were arbitrarily selected in each image. The arithmetic average value of all the thickness measurement results was obtained as the thickness of the film containing a conductive material. The value is shown in Table 1.

Next, a portion of the aluminum foil where the film containing a conductive material was formed was cut into a size of 10 cmx 10 cm. The coating amount of the coating film was measured with the above-described method by using a peeling agent (product name: NEOREVER #346, manufactured by Sansaikako Co., Ltd.). The result is shown in Table 1.

### <Formation of Negative Electrode Active Material Layer>

The above-described aluminum foil on which the film containing a conductive material was formed was cut into a size of 9 cmx9 cm. 86 parts by mass of brookite-type titanium dioxide powder (trade name: NTB-1, manufactured by Showa Denko K.K.) as a negative electrode active material; 2 parts by mass of carbon nanotube (trade name: VGCF-H, manufactured by Showa Denko K.K.) as a conductive assistant; 12 parts by mass of polyvinylidene fluoride (trade name: KF POLYMER #9210 manufactured by Kureha Corporation) as a binder; and 94 parts by mass of N-methyl-2-pyrrolidone (industrial grade) as a dispersion solvent were mixed to obtain a slurry. This slurry was coated on both surfaces of the aluminum foil on which the film containing a conductive material was formed, followed by drying and pressing. As a result, a negative electrode active material layer having a thickness of 81 µm was formed on each single surface, and a negative electrode was prepared.

### (Preparation of Positive Electrode)

On the other hand, 84 parts by mass of lithium cobalt oxide (trade name: CELLSEED C, manufactured by Nippon Chemical Industrial Co., Ltd.) as a positive electrode active material; 6 parts by mass of acetylene black (trade name: DENKA BLACK (powder) manufactured by Denki Kagaku K.K.) as a conductive assistant; 10 parts by mass of polyvinylidene fluoride (trade name: KF POLYMER #1120 manufactured by Kureha Corporation) as a binder; and 95 parts by mass of N-methyl 2-pyrrolidone (industrial grade) as a dispersion solvent were mixed to obtain a slurry. This slurry was coated on both surfaces of aluminum foil having a thickness of 30 µm which was formed of A1085 material washed with alkali, followed by drying and pressing. As a result, a positive electrode active material layer having a thickness of 70 µm was formed on each single surface, and a positive electrode was prepared.

### (Preparation of Secondary Battery)

A separator (trade name: Celgard (registered trademark) 2500, manufactured by Polypore International Inc.) was interposed between the positive electrode and the negative electrode, and an aluminum electrode tab was attached to each of the negative electrode and the positive electrode using an ultrasonic welder. These components were put into an aluminum laminated packaging material (dry laminate type, manufactured by Showa Denko Packaging K.K.) processed into a bag shape in advance, moisture was removed in a vacuum dryer at 60°C. Next, as a non-aqueous electrolytic solution, a LiPF₆ solution having a concentration of 1 M (as a solvent, a mixed solvent of ethylene carbonate (EC), dimethyl carbonate (DMC), and diethyl carbonate (DEC) (EC:DMC:DEC=1:1:1 v/v) was used; to which 1 mass% of vinyl chloride (manufactured by Kishida Chemical Co., Ltd.) was added) was poured into the laminated packaging material, followed by impregnation in a vacuum for 24 hours. Then, an opening of the laminated packaging material was sealed with a vacuum sealer. As a result, a secondary battery was prepared.

### (Evaluation of Secondary Battery)

The secondary battery was evaluated as follows.

The internal resistance was measured with an AC impedance method at a measuring frequency of 1 kHz by using an impedance meter (Model: 3532-80, manufactured by HIOKI E.E. Corporation).

Further, cycle characteristics were measured. In the measurement, by using a charge and discharge evaluation device (manufactured by Toyo System Co., Ltd.), 200 cycles were repeated while changing a current rate to 0.2 C, 2 C and 20 C, and then initial capacity retentions were indicated with respect to 100% of the capacity retention at 0.2 C. The measurement was carried out at a cut voltage of 1.0 V to 3.0 V and SOC=100%.

### (Example 2)

A secondary battery was prepared with the same method as that of Example 1, except that the composition of the coating solution for forming the film containing a conductive material was changed as shown in Table 1; and bronze-type titanium dioxide disclosed in Japanese Unexamined Patent Application First Publication No. 2008-117625 was used as the negative electrode active material. This secondary battery was evaluated.

### (Example 3)

A secondary battery was prepared with the same method as that of Example 1, except that the composition of the coating solution for forming the film containing a conductive material was changed as shown in Table 1; and spinel-type lithium titanate (trade name: XA-105, manufactured by Ishihara Sangyo Kaisha Ltd.) was used as the negative electrode active material. This secondary battery was evaluated.

### (Comparative Example 1)

A secondary battery was prepared with the same method as that of Example 1, except that a negative electrode current collector on which the film containing a conductive material was not formed was used. This secondary battery was evaluated.

### (Comparative Example 2)

A secondary battery was prepared with the same method as that of Example 2, except that a negative electrode current collector on which the film containing a conductive material was not formed was used. This secondary battery was evaluated.

### (Comparative Example 3)

A secondary battery was prepared with the same method as that of Example 3, except that a negative electrode current collector on which the film containing a conductive material was not formed was used. This secondary battery was evaluated.

The evaluation results of the secondary batteries prepared in Examples and Comparative Examples are shown in Table 1.

**[Table 1]**

| | | | | Example 1 | Example 2 | Example 3 | Comparative Example 1 | Comparative Example 2 | Comparative Example 3 |
|---|---|---|---|---|---|---|---|---|---|
| Negative Electrode Current Collector | Material of Coating Solution for Forming Conductive Film | Dispersion Solvent | N-Methyl-2-Pyrrolidone (mass%) | 87.5 | 85.0 | 81.0 | No Conductive Film | No Conductive Film | No Conductive Film |
| | | | Isopropyl Alcohol (mass%) | 5.0 | 5.0 | 6.0 | | | |
| | | Conductive Material | Acetylene Black (mass%) | 2.5 | 5.0 | 8.0 | | | |
| | | Polysaccharide | Glycerylated Chitosan (mass%) | 2.5 | 2.5 | 2.5 | | | |
| | | Organic Acid | Pyromellitic Anhydride (mass%) | 2.5 | 2.5 | 2.5 | | | |
| | Thickness of Conductive Film (µm) | | | 0.6 | 1.2 | 2.6 | | | |
| | Coating Amount of Conductive Film (g/m²) | | | 0.4 | 1.0 | 1.8 | | | |
| Negative Electrode | Negative Electrode Active Material | | | TiO₂ | TiO₂ | Li₄Ti₅O₁₀ | TiO₂ | TiO₂ | Li₄Ti₅O₁₀ |
| | Crystal Form | | | Brookite | Bronze | Spinel | Brookite | Bronze | Spinel |
| | Primary Particle Size (µm) | | | 0.01 | 1.0 | 5.0 | 0.01 | 1.0 | 5.0 |
| Battery | Internal Resistance (mΩ) | | | 12 | 9 | 8 | 31 | 21 | 20 |
| | Capacity Retention (%, With Respect to 0.2 C) after 200 Cycles | 2C | | 91 | 94 | 97 | 91 | 93 | 95 |
| | | 20C | | 66 | 74 | 76 | 48 | 53 | 57 |

### Industrial Applicability

In the negative electrode according to the present invention, the titanium-containing oxide is used as the negative electrode active material. As a result, even when the addition amount of the conductive assistant is small, the internal resistance of a secondary battery which is obtained by using the negative electrode according to the present invention can be significantly reduced. Accordingly, the present invention is extremely industrially useful.

## Claims

1. A negative electrode for a lithium-ion secondary battery, comprising:
a metal foil; and
a negative electrode active material layer that is formed on a single surface or both surfaces of the metal foil and includes a negative electrode active material and a conductive assistant,
wherein a film containing a conductive material is formed between the metal foil and the negative electrode active material layer,
the film containing a conductive material includes a binder, and
the binder includes a polysaccharide, the conductive material is carbon black and/or graphite, **characterized in that** the negative electrode active material includes a titanium-containing oxide, and the conductive assistant is a fibrous carbonaceous material.

2. The negative electrode according to claim 1,
wherein an amount of the conductive assistant in the negative electrode active material layer is 0.5 mass% to 2 mass%.

3. The negative electrode according to claim 1 or 2, wherein an organic acid forms an ester bond with the polysaccharide.

4. The negative electrode according to any one of claims 1 to 3, wherein the negative electrode active material is titanium oxide.

5. The negative electrode according to any one of claims 1 to 3, wherein the negative electrode active material is lithium titanate.

6. The negative electrode according to any one of claims 1 to 5, wherein the metal foil is aluminum foil.

7. The negative electrode according to any one of claims 1 to 6, wherein a thickness of the film containing a conductive material is 0.1 µm to 5 µm.

8. A secondary battery comprising:
the negative electrode according to any one of claims 1 to 7.

9. The secondary battery according to claim 8,
wherein the negative electrode is enclosed by a packaging material together with a positive electrode, a separator, and a non-aqueous electrolyte.

10. The secondary battery according to claim 9,
wherein the packaging material is obtained by laminating a resin on both surfaces of aluminum foil.

## Patentansprüche

1. Negative Elektrode für eine Lithiumionensekundärbatterie, welche umfasst:
eine Metallfolie; und
eine Schicht eines aktiven Materials für eine negative Elektrode, die auf einer einzelnen Oberfläche oder auf beiden Oberflächen der Metallfolie gebildet ist und ein aktives Material für eine negative Elektrode und ein Leitungshilfsmittel aufweist,
wobei ein leitendes Material enthaltender Film zwischen der Metallfolie und der Schicht eines aktiven Materials für eine negative Elektrode gebildet ist,
wobei der ein leitendes Material enthaltender Film ein Bindemittel enthält und
das Bindemittel ein Polysaccharid umfasst,
das leitende Material Ruß und/oder Graphit ist, **dadurch gekennzeichnet, dass** das aktive Material für die negative Elektrode ein Titan enthaltendes Oxid enthält und das Leitungshilfsmittel ein faserförmiges kohlenstoffhaltiges Material ist.

2. Negative Elektrode nach Anspruch 1, wobei die Menge des Leitungshilfsmittels in der Schicht des aktiven Materials für eine negative Elektrode 0,5 Massen-% bis 2 Massen-% ist.

3. Negative Elektrode nach Anspruch 1 oder 2, wobei die organische Säure mit dem Polysaccharid eine Esterbindung ausbildet.

4. Negative Elektrode nach einem der Ansprüche 1 bis 3, wobei das aktive Material für eine negative Elektrode Titanoxid ist.

5. Negative Elektrode nach einem der Ansprüche 1 bis 3, wobei das aktive Material für eine negative Elektrode Lithiumtitanat ist.

6. Negative Elektrode nach einem der Ansprüche 1 bis 5, wobei die Metallfolie eine Aluminiumfolie ist.

7. Negative Elektrode nach einem der Ansprüche 1 bis 6, wobei eine Dicke des ein leitendes Material enthaltenden Films 0,1 bis 5 µm ist.

8. Sekundärbatterie, welche umfasst:
die negative Elektrode nach einem der Ansprüche 1 bis 7.

9. Sekundärbatterie nach Anspruch 8, wobei die negative Elektrode von einem Packungsmaterial zusammen mit einer positiven Elektrode, einem Separator und einem nicht-wässrigen Elektrolyten eingeschlossen ist.

10. Sekundärbatterie nach Anspruch 9, wobei das Packungsmaterial durch Laminieren eines Harzes auf beide Seiten der Aluminiumfolie erhalten wird.

## Revendications

1. Électrode négative pour une batterie secondaire ion-lithium, comprenant:
une feuille métallique; et
une couche de matériau actif d'électrode négative qui est formée sur une seule surface ou sur les deux surfaces de la feuille métallique et qui comprend un matériau actif d'électrode négative et un assistant conducteur,
dans laquelle un film contenant un matériau conducteur est formé entre la feuille métallique et la couche de matériau actif d'électrode négative,
le film contenant un matériau conducteur comprend un liant, et
le liant comprend un polysaccharide,
le matériau conducteur est du noir de carbone et/ou du graphite,
**caractérisé en ce que** le matériau actif d'électrode négative comprend un oxyde contenant du titane, et l'assistant conducteur est un matériau carboné fibreux.

2. Électrode négative selon la revendication 1, dans laquelle une quantité de l'assistant conducteur dans la couche de matériau actif d'électrode négative est comprise entre 0,5 % en masse et 2 % en masse.

3. Électrode négative selon la revendication 1 ou 2, dans laquelle un acide organique forme une liaison ester avec le polysaccharide.

4. Électrode négative selon l'une quelconque des revendications 1 à 3, dans laquelle le matériau actif d'électrode négative est l'oxyde de titane.

5. Électrode négative selon l'une quelconque des revendications 1 à 3, dans laquelle le matériau actif d'électrode négative est le titanate de lithium.

6. Electrode négative selon l'une quelconque des revendications 1 à 5, dans laquelle la feuille métallique est une feuille d'aluminium.

7. Electrode négative selon l'une quelconque des revendications 1 à 6, dans laquelle une épaisseur du film contenant un matériau conducteur est comprise entre 0,1 µm et 5 µm.

8. Batterie secondaire, comprenant l'électrode négative selon l'une quelconque des revendications 1 à 7.

9. Batterie secondaire selon la revendication 8, dans laquelle l'électrode négative est enrobée par un matériau d'emballage de concert avec une électrode positive, un séparateur et un électrolyte non aqueux.

10. Batterie secondaire selon la revendication 9, dans laquelle le matériau d'enrobage est obtenu en stratifiant une résine sur les deux surfaces de la feuille d'aluminium.
